# EUROPEAN PATENT APPLICATION

(11) **EP 4 567 967 A1**
(43) Date of publication of application: **11.06.2025**
(21) Application number: 24205608.3
(22) Date of filing: 09.10.2024
(51) Int. Cl.: H01M 10/613, H01M 10/625, H01M 10/647, H01M 10/6554, H01M 10/6556, H01M 50/209

(54) **MULTI-SEALED COMPOSITE BOX STRUCTURE AND BATTERY PACK**

(30) Priority: 08.12.2023 CN 202311685082; 08.12.2023 CN 202323353671 U
(71) Applicant: Eve Energy Co. Ltd., Huizhou, Guangdong 516000 (CN)
(72) Inventor: Che, Yongjie, Huizhou,Guangdong, 516000 (CN); Huang, Liliang, Huizhou,Guangdong, 516000 (CN); Wen, Shengde, Huizhou,Guangdong, 516000 (CN); Qiu, Yi, Huizhou,Guangdong, 516000 (CN)
(74) Representative: Petraz, Gilberto Luigi

(57) **Abstract**

Disclosed in the present disclosure is a multi-sealed composite box structure, including: a box frame (1), including a side beam profile (13); a bottom protection plate layer (3), assembled to the box frame (1), and a side of the box frame (1) assembled to the bottom protection plate layer (3) being an assembling surface (11); a liquid cooling plate layer (2), positioned between the box frame (1) and the bottom protection plate layer (3); a buffer layer (4), clamped between the bottom protection plate layer (3) and the liquid cooling plate layer (2); at least two first edge sealing layers (5), sealed between the box frame (1) and edges of the liquid cooling plate layer (2); and at least one second edge sealing layer (6), sealed between edges of the liquid cooling plate layer (2) and edges of the bottom protection plate layer (3).

## Description

### TECHNICAL FIELD

The present disclosure relates to the technical field of batteries and, particularly, to a multi-sealed composite box structure and a battery pack.

### BACKGROUND

The battery box in the related techniques is mostly sealed by welding, and the bottom protection plate is composed of several metal plates spliced and welded, which is specifically stir friction welded on the bottom protection plate and the frame externally and CMT welded internally. Under the high intensity working condition of the vehicle, the battery pack may have distortion leading to weld cracking, thereby having airtightness failure leading to safety accidents.

### SUMMARY

The present disclosure is intended to address the following technical issues: how to improve the effectiveness and durability of the sealing of the battery box, reduce the friction between the bottom protection plate layer and the box frame, and increase the protection effect of the battery pack liquid cooling plate and the cell during driving.

As a first aspect, provided in the present disclosure is a multi-sealed composite box structure, including: a box frame, including a side beam profile; a bottom protection plate layer, assembled to the box frame, and a side of the box frame assembled to the bottom protection plate layer being an assembling surface; a liquid cooling plate layer, positioned between the box frame and the bottom protection plate layer; a buffer layer, clamped between the bottom protection plate layer and the liquid cooling plate layer; at least two first edge sealing layers, sealed between the box frame and edges of the liquid cooling plate layer; and at least one second edge sealing layer, sealed between edges of the liquid cooling plate layer and edges of the bottom protection plate layer.

As a second aspect, provided in the present disclosure is a battery pack, including a battery module and a multi-sealed composite box structure.

1. At least one layer of sealing is provided at the assembly edges of the box frame 1 and the bottom protection plate layer, and at least two layers of sealing are provided at the assembly edges of the box frame and the liquid-cooling plate layer, so as to achieve at least three layers of sealing. The airtight reliability of the battery pack is greatly improved, and the at least two sealing layers between the box frame 1 and the liquid cooling plate layer are set horizontally spaced apart, so that there is no stacking of sealing layer heights in effect, thereby reducing the longitudinal space of the sealing compared to a battery pack with the same number of sealing layers.

2. A buffer layer is set up between the bottom protection plate layer and the liquid cooling plate layer, which ensures that the liquid cooling plate is not affected by the amplitude of vibration during driving, achieving its own flexible buffer, and greatly reducing the extrusion deformation or fracture of the liquid cooling plate.

3. Buffer layer with at least two layers of sealing layer allows the battery pack to achieve an overall flexible connection, compared to the rigid connection of welding in the prior art, further improving the protective effect of the liquid cooling plate and the battery cell, thereby greatly improving the safety of the battery pack.

4. It greatly improves the protection effect of the battery pack, provides good self-cushioning adjustment ability, further strengthens the anti-drop and anti-shock characteristics, and also has good sealing to increase the safety and reliability of the battery pack.

### BRIEF DESCRIPTION OF THE DRAWINGS

Fig. 1 is a schematic structural diagram in a perspective view of the embodiment of the present disclosure;
Fig. 2 is a schematic structural diagram in a partial exploded view of the embodiment of the present disclosure;
Fig. 3 is an enlarged view of Fig. 2 at A;
Fig. 4 is a schematic structural diagram in a partial exploded view in Z-axis direction of the embodiment of the present disclosure;
Fig. 5 is a schematic structural diagram of the embodiment of the present disclosure after disassembly;
Fig. 6 is a schematic structural diagram of the assembling surface of the box frame of the embodiment of the present disclosure;
Fig. 7 is a schematic structural diagram in a partial exploded view of the embodiment of the present disclosure;
Fig. 8 is an enlarged view of Fig. 7 at B;
Fig. 9 is a schematic structural diagram for mounting the buffer layer of the embodiment of the present disclosure;
Fig. 10 is a schematic structural diagram of the bottom protection plate layer of the embodiment of the present disclosure after disassembly; and
Fig. 11 is a schematic structural diagram in a partial exploded view of the side beam profile of the embodiment of the present disclosure.

The meanings of the attached markings are as follows: 1 box frame; 11 assembling surface; 12 connecting surface; 13 side beam profile; 131 first stepped surface; 132 second stepped surface; 133 third stepped surface; 14 intermediate beam structure; 2 liquid cooling plate layer; 3 bottom protection plate layer; 31 bottom protection plate body; 311 protruding step; 312 assembling step; 313 groove; 314 accommodating chamber; 32 protective coating; 321 gap; 4 buffer layer; 41 through-hole; 5 first edge sealing layer; 51 first sealing layer; 52 second sealing layer; 6 second edge sealing layer; 7 rivet nut; 8 bolt; 9 flow drilling screw; 10 reinforcing structure; 101 reinforcing rib; 102 assembly protruding step.

### DETAILED DESCRIPTION

In some implementations, the assembling surface of the side beam profile is provided with at least one descending stepped structure disposed from outer edges to inner edges, at least two first edge sealing layers are spaced apart along a descending direction of the stepped structure, and a thickness of the first edge sealing layer proximal to inner edges of the assembling surface is greater than that of the first edge sealing layer proximal to outer edges of the assembling surface.

By adopting the solution mentioned above, a buffer layer is provided between the bottom protection plate layer and the liquid cooling plate layer, which may increase the flexible buffering of the liquid cooling plate, and also forms a multi-layer sealing between the box frame, the bottom protection plate layer, and the liquid cooling plate layer, so as to improve the airtightness of the battery pack. The at least two first edge sealing layers between the box frame and the liquid cooling plate layer are set horizontally. Number of the sealing layers is increased, but the sealing thickness between the box frame and the liquid cooling plate layer is not increased, which therefore improves the sealing while also reduces the longitudinal space of the battery pack.

In some implementations, the stepped structure includes a first stepped surface, a second stepped surface, and a third stepped surface arranged sequentially along the descending direction, and the first edge sealing layer is provided on at least one of the first stepped surface and the second stepped surface.

By adopting the solution mentioned above, it allows an increase in the connection airtightness between the liquid cooling plate layer and the box frame, and each first edge sealing layer is not stacked on top of each other, therefore it does not increase the total sealing thickness.

In some implementations, the first edge sealing layer includes a first sealing layer, a side of the first sealing layer is configured to be abutted against the first stepped surface, and an opposite side of the first sealing layer is configured to be abutted against the liquid cooling plate layer.

By adopting the solution mentioned above, the first layer of sealing structure is achieved and good airtightness of the battery pack is ensured.

In some implementations, the first edge sealing layer includes a second sealing layer, a side of the second sealing layer is configured to be abutted against the second stepped surface, and an opposite side of the second sealing layer is configured to be abutted against the liquid cooling plate layer.

By adopting the solution mentioned above, the second sealing layer may not only improve the airtightness, but also lead to an addition of the flexible buffering between the liquid cooling plate layer and the box frame.

In some implementations, the bottom protection plate layer includes a bottom protection plate body and a protective coating, and the protective coating is assembled to a side of the bottom protection plate body distal to the box frame.

By adopting the solution mentioned above, the protective coating provides the following properties: such as waterproof, flame-retardant, mildew-resistant, cold resistant, corrosion-resistant, aging-resistant, UV-resistant, easy-to-clean, high-temperature-resistant, and good heat preservation, which may effectively protect the bottom protection plate, reduce potential damage to the battery caused by cuts and scraps on car chassis.

In some implementations, edges of the bottom protection plate body are provided with a periphery of a protruding step protruding toward the box frame, a side of the second edge sealing layer is configured to be abutted against a surface of the protruding step, and an opposite side of the second edge sealing layer is configured to be abutted against the liquid cooling plate layer.

By adopting the solution mentioned above, the protruding steps are conducive to the assembly between the bottom protection plate layer and the liquid cooling plate layer, which achieves edge-to-edge fitting, and provides basis for sealing the edges.

In some implementations, an inner side of the protruding step of the bottom protection plate body is formed with an accommodating chamber concave in a direction distal to the box frame, the buffer layer is positioned in the accommodating chamber, edges of an outer side of the protruding step are extended outwards to form a plurality of assembling steps and grooves connected alternately, main surfaces of the plurality of assembling steps are aligned with that of the protruding step, and main surfaces of the plurality of grooves are aligned with that of the bottom protection plate body on the inner side of the protruding step.

By adopting the solution mentioned above, the assembling step is assembled to the box frame, so that the buffer layer is pressed tightly to achieve the sealing and buffering.

In some implementations, the accommodating chamber of the bottom protection plate body is provided with a reinforcing structure, and at least one of followings is met: the reinforcing structure is abutted against the buffer layer, and the reinforcing structure passes through the buffer layer to be in close proximity to the liquid cooling plate layer.

By adopting the solution mentioned above, the reinforcing structure may enhance the self strength of the bottom protection plate body, and/or, enhance the assembly strength between the bottom protection plate body, the liquid cooling plate layer, and the frame.

In some implementations, a surface of the buffer layer proximal to the liquid cooling plate layer is protruded from a plane where the protruding step is positioned.

By adopting the solution mentioned above, the buffer layer achieves the buffering in a direction of its thickness.

In some implementations, the protective coating is abutted against a surface of the bottom protection plate body distal to the box frame, and the protective coating is provided with a plurality of gaps corresponding to the plurality of assembling steps of the bottom protection plate body.

By adopting the solution mentioned above, the gaps may be designed in parts of the bottom protection plate that are not easily damaged to reduce the weight, lowering the overall weight of the battery pack and achieving the concept of lightweight.

In some implementations, the assembling surface of the box frame is provided with a plurality of rivet nuts spaced apart, the bottom protection plate layer is attached to the rivet nuts by bolts, the liquid cooling plate layer is provided with allowance holes for avoiding contacting the bolts, and the liquid cooling plate layer is connected to the box frame through flow drilling screws.

In some implementations, at least one of followings is met: a distance between two adjacent flow drilling screws for connecting the liquid cooling plate and the box frame is not greater than 85mm; a piercing thickness of the flow drilling screws between the liquid cooling plate layer and the box frame is not greater than 4.5mm; and a distance between two adjacent rivet nuts of the assembling surface is not greater than 85mm.

By adopting the solution mentioned above, the securing stability between the liquid cooling plate layer and the box frame is satisfied, the securing stability between the box frame and the bottom protection plate layer is also satisfied. The piercing thickness of the flow drilling screws between the liquid cooling plate layer and the box frame being not greater than 4.5mm may restrict the thickness and the height of the box frame, and the piercing of the flow drilling screws may achieve the flexible compression of the first edge sealing layer. Multiple layers of the first edge sealing layers are identical in height after compressed, which saves space in the height direction, so as to reduce the overall height of the battery pack.

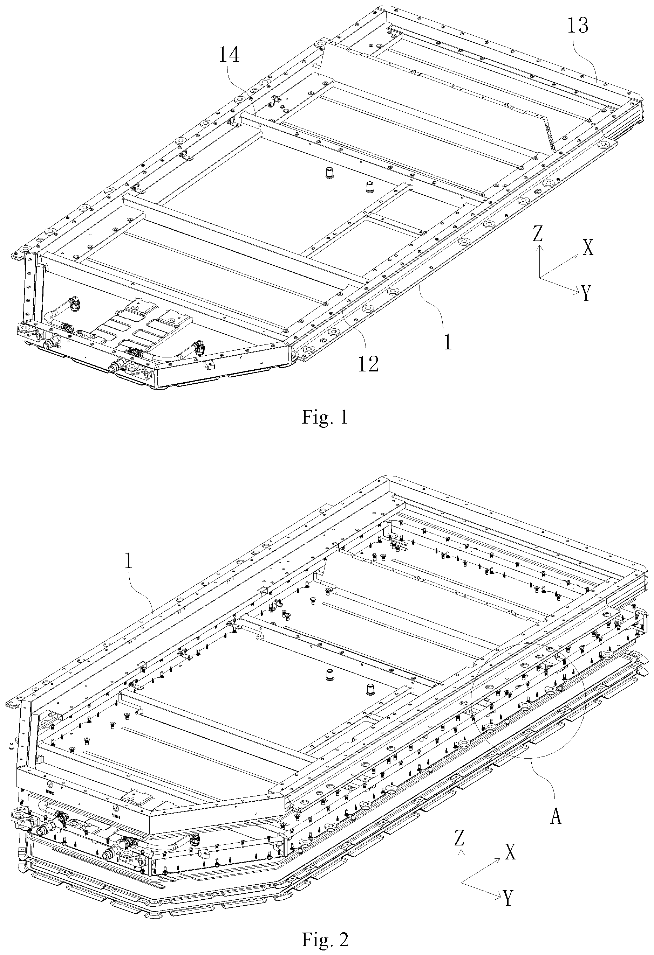

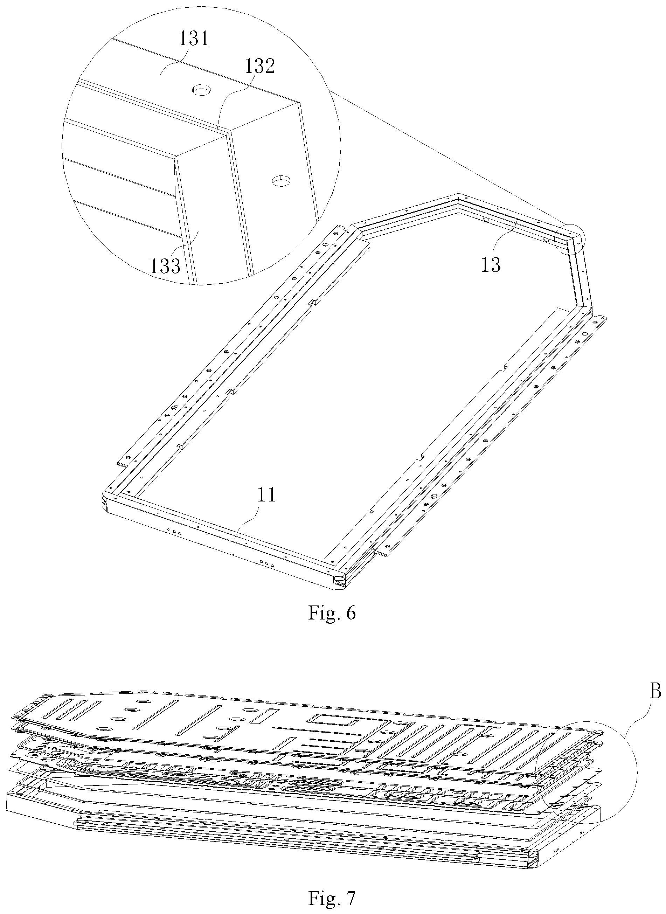

Referring to Figs. 1-11 in the present disclosure, disclosed is a multi-sealed composite box structure, including a box frame 1, liquid cooling plate layer 2, a buffer layer 4, and a bottom protection plate layer 3 provided sequentially from top to bottom. At least two first edge sealing layers 5 are sealed between the box frame 1 and edges of the liquid cooling plate layer 2. At least one second edge sealing layers 6 are sealed between edges of the liquid cooling plate layer 2 and edges of the bottom protection plate layer 3. The box frame 1 has an assembling surface 11, the assembling surface 11 is provided with a plurality of rivet nuts 7 spaced apart, the bottom protection plate layer 3 is attached to the rivet nuts 7 by bolts 8, the liquid cooling plate layer 2 is provided with allowance holes for avoiding contacting the bolts 8, and the liquid cooling plate layer 2 is connected to the box frame 1 through flow drilling screws 9. By adopting the assembly method described above and the at least two layers of the sealing structure, a buffer layer 4 is provided between the bottom protection plate layer 3 and the liquid cooling plate layer 2, which may increase the flexible buffer of the liquid cooling plate, and allow a multi-sealing to be formed between the box frame 1, the bottom protection plate layer 3, and the liquid cooling plate 2, thereby increasing the airtight reliability of the battery pack.

A height direction of the battery pack is set as the Z-axis, the battery pack is placed with the direction toward the front of the car as the X-axis, and a direction perpendicular to the X-axis as the Y-axis. The box frame 1 includes a frame body and an intermediate beam structure 14, the side beam body is made of several side beam profiles 13 spliced together from end to end. The splices between frame body and the intermediate beam structure 14, among the side beam profiles 13 include, but are not limited to, such as welding, bonding, or one-piece connection. The specific number of the intermediate beam structures 14 is not specifically limited.

Specifically, in the present embodiment 1, there are 2-4 pieces of the intermediate beam structures 14 provided along the Y-axis, and a micro-beam along the X-axis is provided between two intermediate beam structures positioned in the middle. A bottom surface of the intermediate beam structure along the Y-axis, i.e., an assembling surface 11, is provided with a plurality of rivet nuts 7 assembled to the bottom protection plate and a plurality of holes for threading the flow drilling screws assembled to the bottom protection plate. A bottom surface of the side beam profiles 13, i.e., the assembling surface 11, is provided with a plurality of holes for threading the flow drilling screws and holes for threading the bolts 8, and the holes for threading the flow drilling screws are spaced apart from the holes for threading the bolts 8, so as to achieve the assembly connection of the box frame 1.

In the Z-axis direction, the box frame 1 includes the assembling surface 11 on bottom and a connecting surface 12 on top, in which the assembling surface 11 is configured to be assembled with the liquid cooling plate layer 2 and the bottom protection plate layer 3, and the connecting surface 12 is configured to connect the cover structure of the battery pack. The assembling surface 11 of the side beam profiles 13 is provided with at least one descending stepped structure disposed from outer edges to inner edges, which is configured to horizontally provide with at least two first edge sealing layers 5 spaced apart, and a thickness of the first edge sealing layer 5 with the assembling surface 11 proximal to inner edges is greater than that of the first edge sealing layer 5 with the assembling surface 11 proximal to outer edges. At least two first edge sealing layers 5 are horizontally provided between the box frame 1 and the liquid cooling plate layer 2, which leads to an increase of the number of sealing, but without an increase of the sealing thickness between the box frame 1 and the liquid cooling plate layer 2, thereby improving the sealing and lowering the longitudinal space of the battery pack along the Z-axis. Each of the stepped structure includes a first stepped surface 131, a second stepped surface 132, and a third stepped surface 133 arranged sequentially along the descending direction. The first edge sealing layer 5 is provided on the first stepped surface 131 and/or the second stepped surface 132, which may improve the connection airtightness between the liquid cooling plate layer 2 and the box frame 1. In the present embodiment 1, each side beam profile 13 provided along the Y-axis is provided with one stepped structure, and each side beam profile 13 provided along the X-axis is provided with two stepped structures. The stepped structure positioned on the outer side is configured to seal the first edge sealing layer 5, and the stepped structure positioned on the inner side is configured to secure and assemble with the bottom protection plate layer 3 and/or the liquid cooling plate layer 2.

Specifically, in the present embodiment 1, referring to Figs. 1-8, there are two layers of the first edge sealing layers 5, which are the first sealing layer 51 and the second sealing layer 52. A side of the first sealing layer 51 is configured to be abutted against the first stepped surface 131, and an opposite side of the first sealing layer 51 is configured to be abutted against the liquid cooling plate layer 2, so as to form a first sealing ring structure. A side of the second sealing layer 52 is configured to be abutted against the second stepped surface 132, and an opposite side of the second sealing layer 52 is configured to be abutted against the liquid cooling plate layer 2, so as to form a second sealing ring structure. There is one layer of the second edge sealing layer 6. Edges of the bottom protection plate body 3 are provided with a periphery of a protruding step 311 protruding toward the box frame 1, a side of the second edge sealing layer 6 is configured to be abutted against a surface of the protruding step 311, and an opposite side of the second edge sealing layer 6 is configured to be abutted against the liquid cooling plate layer 2, so as to form the third sealing ring structure. The first sealing ring structure may serve to seal the box frame 1 and the liquid cooling plate layer 2, and the first sealing ring structure itself has a small amount of deformability to achieve a first buffering effect. A thickness of the second sealing ring structure is greater than that of the first sealing ring structure, and the second sealing ring structure is protruding from the first stepped surface 131, which may form a pre-tension force when securing and connecting the box frame 1 and the liquid cooling plate layer 2 to further enhance the connection airtightness. Besides, the extruded second sealing ring structure itself still has a certain amount of deformability, so that a second buffering effect is also achieved. The third sealing ring structure serves to seal the bottom protection plate layer 3 and the liquid cooling plate layer 2, when the bolts 8 penetrate through the bottom protection plate layer 3 and the liquid cooling plate layer 2 to be secured with the rivet nuts 7 on the box frame 1, the third sealing ring structure may form a pre-tension force, which further improves the connection airtightness between the bottom protection plate layer 3 and the liquid cooling plate layer 2. Moreover, the third sealing ring structure itself has a certain amount of deformability, so as to achieve the third buffering effect. By adopting three layers of buffering effect, it greatly improves the overall flexible sealing effect of the battery pack, and provides strong self-buffering ability while satisfying the airtightness of the battery pack, which reduces the hardness of the car's own vibration on the battery pack's internal cells and liquid cooling plate layer 2 when driving, and reduces the possibility of the liquid cooling plate layer 2 to break and bend, which effectively protects the use of the cells, thereby improving the overall safety performance of the battery pack.

It should be noted that the first sealing ring structure, the second sealing ring structure, and the third sealing ring structure include, but are not limited to, such as sealing adhesive, silicone foam sealing ring, or structural adhesive. In the present embodiment 1, the first sealing ring structure adopts a sealing adhesive to be applied to form a first sealing layer 51, the second sealing ring structure and the third sealing ring structure adopt the silicone foam sealing ring, which may provide good cushioning and sealing performance. The first sealing ring structure and the second sealing ring structure are provided in a horizontal direction and spaced apart, so that the first sealing ring structure is not stacked with the second sealing ring structure. Therefore, no increase in total sealing thickness is expected, reducing the height of the battery pack in the Z-axis direction.

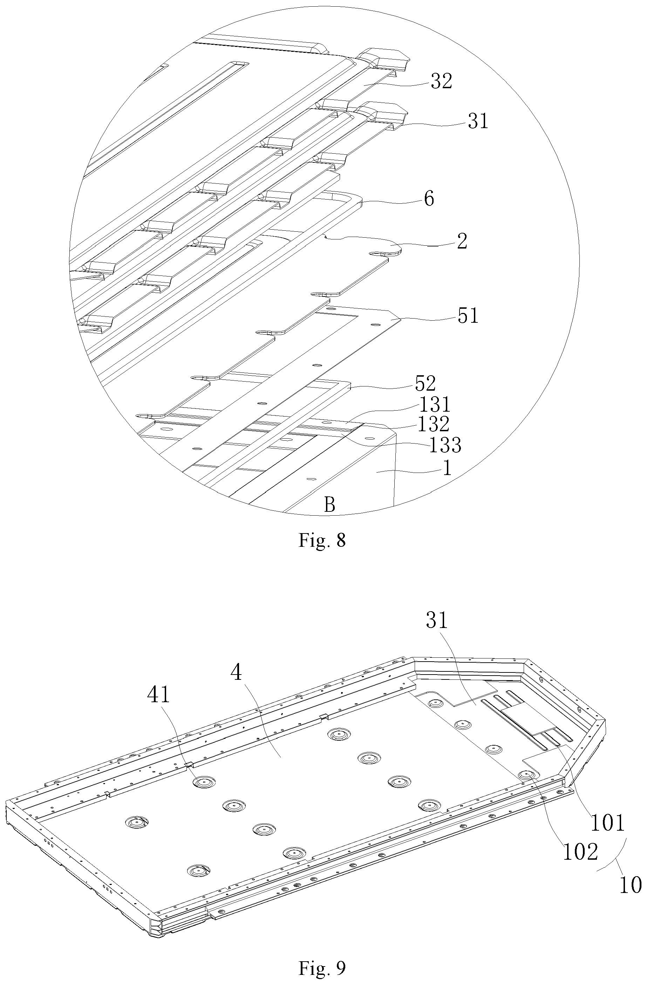

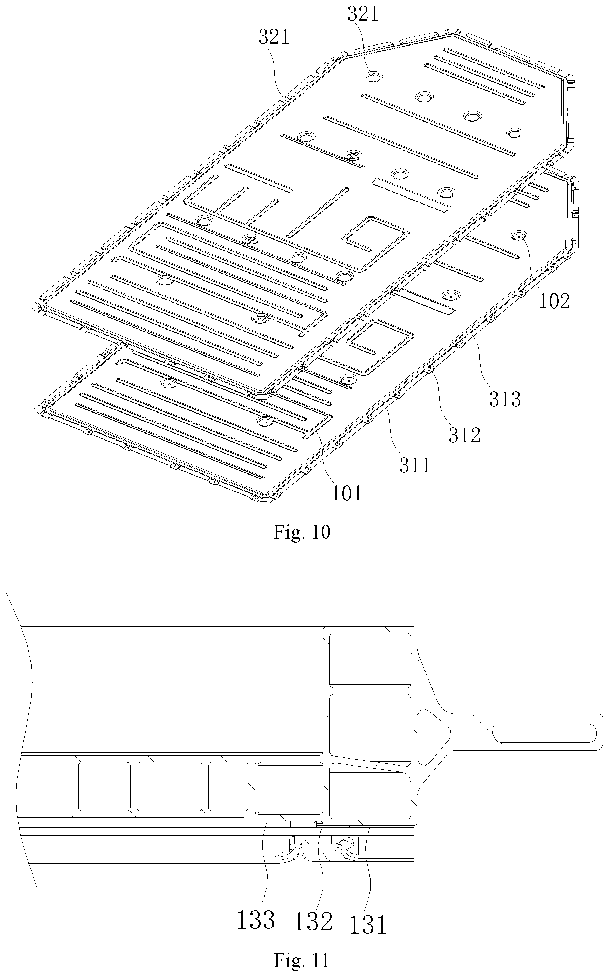

In some implementations, referring to Figs. 8 and 10, in order to safeguard the performance of the bottom surface of the bottom protection plate layer 3 itself and to improve its own protection capability, the bottom protection plate layer 3 is designed as an integral connection or an integral assembly between the bottom protection plate body 31 and the protective coating 32, with the protective coating 32 being assembled on the bottom surface of the bottom protection plate. In the present embodiment 1, the protective coating 32 adopts a PVC coating structure, and the PVC coating structure is waterproof, flame retardant, mildew resistant, cold resistant, corrosion resistant, aging resistant, UV resistant, easy to clean, high temperature resistant, and has good heat preservation, which effectively protects the bottom protection plate layer 3 and reduces the damage to the battery caused by the cuts and scrapes of the automobile chassis, and also plays a role in waterproofing and mildew proofing when water enters into the automobile chassis.

Specifically, in the present embodiment 1, referring to Fig. 9 and 10, edges of the bottom protection plate body 31 are provided with a periphery of a protruding step 311 protruding toward the box frame 1, a side of the second edge sealing layer 6 is configured to be abutted against a surface of the protruding step 311, and an opposite side of the second edge sealing layer 6 is configured to be abutted against the liquid cooling plate layer 2. The protruding step 311 is conducive to the assembly between the bottom protection plate layer 3 and the liquid cooling plate layer 2, which achieves edge-to-edge fitting, also provides basis for the sealing of the edges. An inner side of the protruding step 311 of the bottom protection plate body 31 is formed with an accommodating chamber 314 which is concave in a direction distal to the box frame 1, the buffer layer 4 is positioned in the accommodating chamber 314, edges of an outer side of the protruding step 311 are extended outwards to form a plurality of assembling steps 312 and grooves 313 connected alternately, top surfaces of the plurality of assembling steps 312 are aligned with that of the protruding step 311, and bottom walls of an inner side of the plurality of grooves 313 are aligned with a top surface of the bottom protection plate body 31 on the inner side of the protruding step 311, so as to facilitate the assembly between the assembling step 312 and the box frame 1, and the buffer layer 4 is also pressed tightly to achieve the sealing and buffering.

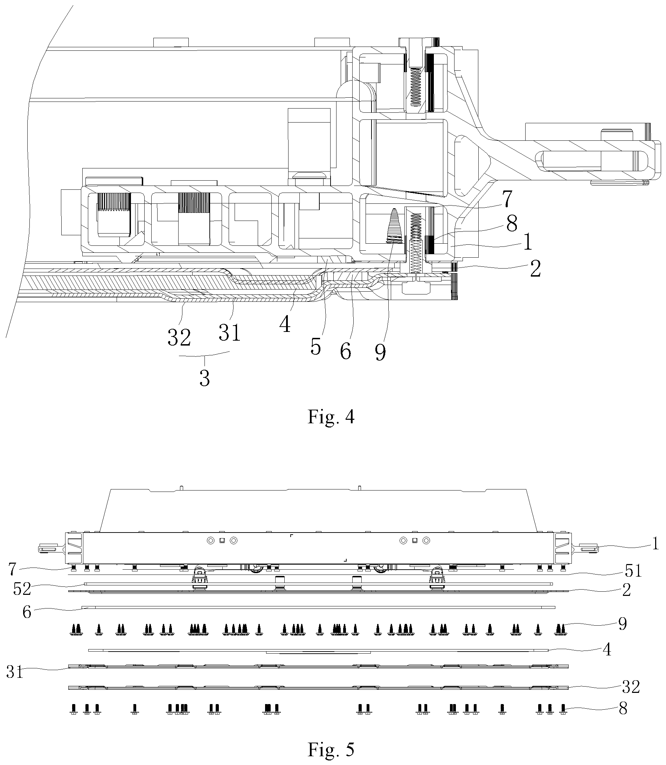

Referring to Figs. 4 and 9, in order to allow the buffer layer 4 in the accommodating chamber 314 to play a role of buffering, a surface of the buffer layer 4 proximal to the liquid cooling plate layer 2 is protruded from a plane where the protruding step 311 is positioned, so that the buffer layer 4 achieves the buffer effect in the Z-axis direction. Therefore, the thickness of the buffer layer 4 should be greater than a depth of the accommodating chamber 314, yet excessive thickness of the buffer layer 4 may increase the overall weight of the battery pack. Therefore, in some implementations, the accommodating chamber 314 of the bottom protection plate body 31 is provided with a reinforcing structure 10. The reinforcing structure 10 is abutted against the buffer layer 4, and/or, the reinforcing structure 10 passes through the buffer layer 4 and is abutted against the liquid cooling plate layer 2. The reinforcing structure 10 enhances the self strength of the bottom protection plate body 31, and/or, enhances the assembly strength between the bottom protection plate body 31, the liquid cooling plate layer 2, and the frame.

Specifically, referring to Figs. 9 and 10, the reinforcing structure 10 includes reinforcing ribs 101 and the assembly protruding steps 102, and the reinforcing ribs 101 are protruded upwards in the Z-axis direction, so as to reduce the thickness of the buffer layer 4, so that the upper surface thereof may satisfy to be higher than the protruding step 311. The reinforcing ribs 101 are not limited in structure and direction, as long as the reinforcing ribs 101 is able to smoothly support the buffer layer 4 on a plane. The assembly protruding steps 102 are also protruded upwards in the Z-axis direction, so as to get close to the intermediate beam structure 14 configured along the X-axis direction, so that screws may pass through the assembly protruding steps 102 to be secured and mounted to the rivet nuts 7 on a bottom of the intermediate beam structure 14. A height of the assembly protruding step 102 should be greater than or equal to a length of the bolt 8, so that a lower end of the bolt 8 may not be protruded from a bottom of the bottom protection plate body 31. The buffer layer 4 is provided with through-holes 41 for avoiding contacting the assembly protruding steps 102, as long as the assembly protruding steps 102 may not act on the buffer layer 4 when screws pass through the assembly protruding steps 102 to be secured and mounted to the rivet nuts 7 on a bottom of the intermediate beam structure 14. A shape of the assembly protruding step 102 is not specifically limited. In the present embodiment 1, the reinforcing rib 101 is a shape of bar, and the assembly protruding step 102 is a shape of truncated cone.

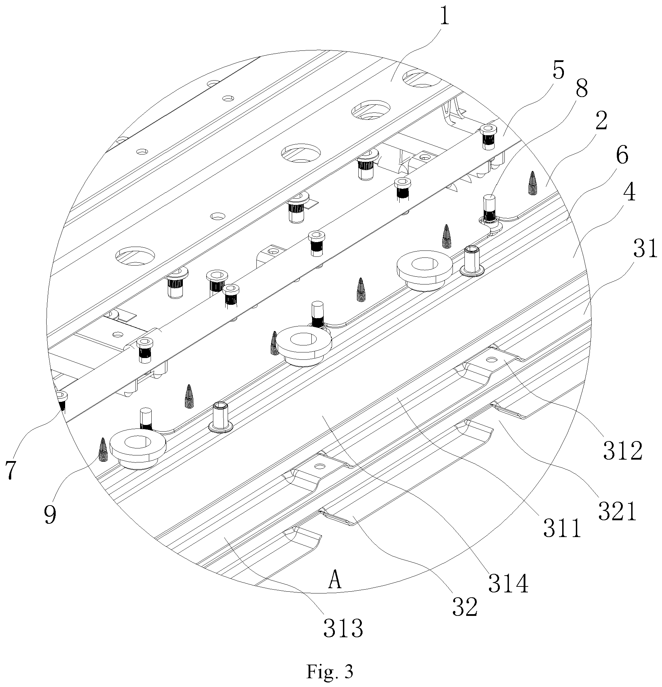

In some implementations, referring to Figs. 3 and 10, in order to further reduce the weight of the battery pack, appropriate weight reduction may be made on the protective coating 32. Specifically, the protective coating 32 is abutted against a surface of the bottom protection plate body 31 distal to the box frame 1, so as to protect the bottom surface of the bottom protection plate. Among the upwardly protruding parts of the bottom protection plate, since the surfaces of the assembly protruding steps 102 and the assembling steps 312 are relatively far from other planes, the possibility occurring friction or collision is relatively low. Therefore, the protective coating 32 is provided with gaps 321 where the assembling steps 312 and the assembly protruding steps 102 of the bottom protection plate body 31 are positioned, so as to reduce the area of the protective coating 32, which saves the raw materials and also reduces the weight, reducing the overall weight of the battery pack, achieving a lightweight concept.

In order to satisfy the secure stability between the liquid cooling plate layer 2 and the box frame 1, and between the box frame 1 and the bottom protection plate layer 3, a distance between two adjacent flow drilling screws 9 and/or rivet nuts 7 should be further limited. Specifically, at least one of followings is met: a distance between two adjacent flow drilling screws 9 for connecting the liquid cooling plate 2 and the box frame 1 is not greater than 85mm; a piercing thickness of the flow drilling screws 9 between the liquid cooling plate layer 2 and the box frame 1 is not greater than 4.5mm; and a distance between two adjacent rivet nuts 7 of the assembling surface 2 is not greater than 85mm. The fact that the piercing thickness of the flow drilling screws 9 between the liquid cooling plate layer 2 and the box frame 1 being not greater than 4.5mm may restrict the thickness and height of the box frame 1, which achieves the spatial compression of the edge sealing layer 5 and the second edge sealing layer 6 in the Z-axis direction, so as to achieve the flexible connection and a reduction in space occupation. With the specified limitations, the distance between two adjacent rivet nuts 7 may be different, or partly identical, and the distance between two adjacent flow drilling screws 9 may be different, or partly identical, which should be designed based on the actual situation to achieve no interference between the rivet nuts 7 and the flow drilling screws 9.

The present disclosure also relates to a battery pack, including a cover, a battery module, and a multi-sealed composite box structure. The cover is assembled to the connecting surface 12 of the box frame 1, the battery module is position-limited assembled in the box frame 1 below the cover, and a three-layer flexible sealing structure between the box frame 1, the bottom protection plate layer 3, and the liquid cooling plate layer 2 is able to be configured to improve the resistance of the cell in the battery module. It greatly improves the protection effect of the battery pack, provides good self-cushioning adjustment ability, further strengthens the anti-drop and anti-shock characteristics, and also has good sealing to increase the safety and reliability of the battery pack.

In summary, the multi-sealed composite box structure provided in the present disclosure provides the technical effects as follows.
1. At least one layer of sealing is provided at the assembly edges of the box frame 1 and the bottom protection plate layer 3, and at least two layers of sealing are provided at the assembly edges of the box frame 1 and the liquid-cooling plate layer 2, so as to achieve at least three layers of sealing. The airtight reliability of the battery pack is greatly improved, and the at least two sealing layers between the box frame 1 and the liquid cooling plate layer 2 are set horizontally spaced apart, so that there is no stacking of sealing layer heights in effect, thereby reducing the longitudinal space of the sealing compared to a battery pack with the same number of sealing layers.
2. A buffer layer 4 is set up between the bottom protection plate layer 3 and the liquid cooling plate layer 2, which ensures that the liquid cooling plate is not affected by the amplitude of vibration during driving, achieving its own flexible buffer, and greatly reducing the extrusion deformation or fracture of the liquid cooling plate.
3. Buffer layer 4 with at least two layers of sealing layer allows the battery pack to achieve an overall flexible connection, compared to the rigid connection of welding in the prior art, further improving the protective effect of the liquid cooling plate and the battery cell, thereby greatly improving the safety of the battery pack.

## Claims

1. A multi-sealed composite box structure, comprising:
a box frame (1), comprising a side beam profile (13);
a bottom protection plate layer (3), assembled to the box frame (1), and a side of the box frame (1) assembled to the bottom protection plate layer (3) being an assembling surface (11);
a liquid cooling plate layer (2), positioned between the box frame (1) and the bottom protection plate layer (3);
a buffer layer (4), clamped between the bottom protection plate layer (3) and the liquid cooling plate layer (2);
at least two first edge sealing layers (5), sealed between the box frame (1) and edges of the liquid cooling plate layer (2); and
at least one second edge sealing layer (6), sealed between edges of the liquid cooling plate layer (2) and edges of the bottom protection plate layer (3).

2. The multi-sealed composite box structure according to claim 1, wherein the assembling surface (11) of the side beam profile (13) is provided with at least one descending stepped structure disposed from outer edges to inner edges, at least two first edge sealing layers (5) are spaced apart along a descending direction of the stepped structure, and a thickness of the first edge sealing layer (5) proximal to inner edges of the assembling surface (11) is greater than that of the first edge sealing layer (5) proximal to outer edges of the assembling surface (11).

3. The multi-sealed composite box structure according to claim 2, wherein the stepped structure comprises a first stepped surface (131), a second stepped surface (132), and a third stepped surface (133) arranged sequentially along the descending direction, and the first edge sealing layer (5) is provided on at least one of the first stepped surface (131) and the second stepped surface (132).

4. The multi-sealed composite box structure according to claim 3, wherein the first edge sealing layer (5) comprises a first sealing layer (51), a side of the first sealing layer (51) is configured to be abutted against the first stepped surface (131), and an opposite side of the first sealing layer (51) is configured to be abutted against the liquid cooling plate layer (2).

5. The multi-sealed composite box structure according to claim 4, wherein the first edge sealing layer (5) comprises a second sealing layer (52), a side of the second sealing layer (52) is configured to be abutted against the second stepped surface (132), and an opposite side of the second sealing layer (52) is configured to be abutted against the liquid cooling plate layer (2).

6. The multi-sealed composite box structure according to claim 5, wherein the bottom protection plate layer (3) comprises a bottom protection plate body (31) and a protective coating (32), and the protective coating (32) is assembled to a side of the bottom protection plate body (31) distal to the box frame (1).

7. The multi-sealed composite box structure according to claim 6, wherein edges of the bottom protection plate body (31) are provided with a periphery of a protruding step (311) protruding toward the box frame (1), a side of the second edge sealing layer (6) is configured to be abutted against a surface of the protruding step (311), and an opposite side of the second edge sealing layer (6) is configured to be abutted against the liquid cooling plate layer (2).

8. The multi-sealed composite box structure according to claim 7, wherein an inner side of the protruding step (311) of the bottom protection plate body (31) is formed with an accommodating chamber (314) concave in a direction distal to the box frame (1), the buffer layer (4) is positioned in the accommodating chamber (314), edges of an outer side of the protruding step (311) are extended outwards to form a plurality of assembling steps (312) and grooves (313) connected alternately, top surfaces of the plurality of assembling steps (312) are aligned with that of the protruding step (311), and bottom walls of an inner side of the plurality of grooves (313) are aligned with a top surface of the bottom protection plate body (31) on the inner side of the protruding step (311).

9. The multi-sealed composite box structure according to claim 8, wherein the accommodating chamber (314) of the bottom protection plate body (31) is provided with a reinforcing structure (10), and at least one of followings is met: the reinforcing structure (10) is abutted against the buffer layer (4), and the reinforcing structure (10) passes through the buffer layer (4) to be in close proximity to the liquid cooling plate layer (2).

10. The multi-sealed composite box structure according to claim 8 or 9, wherein a surface of the buffer layer (4) proximal to the liquid cooling plate layer (2) is protruded from a plane where the protruding step (311) is positioned.

11. The multi-sealed composite box structure according to claim 8, wherein the protective coating (32) is abutted against a surface of the bottom protection plate body (31) distal to the box frame (1), and the protective coating (32) is provided with a plurality of gaps (321) corresponding to the plurality of assembling steps (312) of the bottom protection plate body (31).

12. The multi-sealed composite box structure according to claim 1, wherein the assembling surface (11) of the box frame (1) is provided with a plurality of rivet nuts (7) spaced apart, the bottom protection plate layer (3) is attached to the rivet nuts (7) by bolts (8), the liquid cooling plate layer (2) is provided with allowance holes for avoiding contacting the bolts (8), and the liquid cooling plate layer (2) is connected to the box frame (1) through flow drilling screws (9).

13. The multi-sealed composite box structure according to claim 12, wherein at least one of followings is met: a distance between two adjacent flow drilling screws (9) for connecting the liquid cooling plate (2) and the box frame (1) is not greater than 85mm; a piercing thickness of the flow drilling screws (9) between the liquid cooling plate layer (2) and the box frame (1) is not greater than 4.5mm; and a distance between two adjacent rivet nuts (7) of the assembling surface (11) is not greater than 85mm.

14. A battery pack, comprising a battery module and the multi-sealed composite box structure according to any one of claims 1-13.
